# FASCICULE DE BREVET EUROPEEN

(11) **EP 0 929 410 B1**
(45) Date de publication et mention de la délivrance du brevet: **31.10.2001**
(21) Numéro de dépôt: 97909295.4
(22) Date de dépôt: 19.09.1997
(51) Int. Cl.: B60N 2/00

(54) **Méthode et dispositif pour déterminer plusieurs paramètres d'une personne assise sur un siège**
Verfahren und Vorrichtung zur Bestimmung von verschiedenen Parametern einer auf einen Sitz sitzenden Person
Method and device for determining several parameters of a seated person

(30) Priorité: 03.10.1996 LU 88823; 21.03.1997 LU 90042
(43) Date de publication de la demande: 21.07.1999
(73) Titulaire: I.E.E. International Electronics & Engineering S.à.r.l., L-2632 Luxembourg (LU)
(72) Inventeur: SCHOOS, Aloyse, L-8094 Bertrange (LU); SERBAN, Bodgan, L-4610 Niederkorn (LU); WITTE, Michel, L-8077 Bertrange (LU)
(74) Mandataire: Beissel, Jean
(86) Numéro de dépôt international: EP9705146
(87) Numéro de publication internationale: WO9814345

(56) Documents cités:
- EP-A- 0 538 656
- EP-A- 0 728 636
- US-A- 4 315 238
- US-A- 4 489 302
- US-A- 4 810 992
- US-A- 5 232 243
- US-A- 5 474 327

## Description

La présente invention concerne une méthode et un dispositif pour déterminer plusieurs paramètres d'une personne assise sur un siège, comme p.ex. la taille et/ou le poids du passager et/ou son orientation sur le siège. Un tel dispositif trouve son application notamment dans le domaine de la commande du système de protection des véhicules automobiles.

Afin de protéger la vie des passagers lors d'un accident de la circulation, les véhicules modernes sont équipés le plus souvent d'un système de protection comprenant plusieurs airbags et des prétensionneurs de ceintures, qui servent à absorber l'énergie d'un passager libérée lors du choc de l'accident. Il est clair que de tels systèmes sont d'autant plus efficaces qu'ils sont mieux adaptés aux besoins spécifiques de chaque passager, c'est-à-dire au poids et/ou à la taille du passager. C'est pourquoi on a perfectionné des systèmes de protection commandés par microprocesseur qui permettent plusieurs modes de fonctionnement, à savoir qui permettent par exemple une adaptation du moment et du volume de déploiement des airbags, du moment de déblocage de la ceinture de sécurité après le choc, etc. en fonction de la stature du passager et de sa position et son orientation sur le siège.

Afin de permettre au microprocesseur de commande de décider du mode de fonctionnement optimal pour un certain passager, il est donc nécessaire de disposer d'un dispositif de détection de la stature du passager qui détermine la taille et/ou le poids et/ou l'orientation du passager et qui l'indique au circuit de commande du système de protection. A cet effet, le brevet US-A-5,232,243 décrit un dispositif de détection du poids d'un passager qui comprend plusieurs capteurs de force individuels arrangés en matrice dans le coussin du siège du véhicule. Les capteurs de force ont une résistance électrique variable en fonction de la force appliquée et sont connus sous le nom de FSR (force sensing resistor). La résistance de chaque capteur est mesurée individuelletance, on obtient une indication sur la force totale exercée, c'est-à-dire sur le poids du passager.

Un tel dispositif mesurant la valeur de la force exercée par un passager ou un objet est également décrit dans le document US-A-5,474,327. Si la valeur mesurée se situe dans une certaine gamme de poids, le dispositif conclut que le siège est occupé par un siège auxiliaire pour enfants. Dans ce cas le document US-A-5,474,327 décrit de déterminer en outre la position du barycentre de la force exercée par le siège enfant sur ledit siège. Cette détermination de position du barycentre de force sert uniquement afin de pouvoir distinguer entre différents types de siège pour enfants.

Cependant, tout le poids d'un passager n'agit pas uniquement sur la surface de siège, car une partie du poids est supportée par les jambes du passager qui reposent sur le fond de la voiture et une autre partie repose sur le dossier du siège. En outre, les rapports entre les différentes parties varient fortement en fonction de la position du passager sur le siège, ce qui fait que la force totale mesurée par les différents capteurs de force individuels ne correspond pas au poids réel du passager mais est soumise à de très grandes variations selon la tenue de celui-ci sur le siège.

De plus, en raison des variations des caractéristiques du rembourrage du siège avec la température, les forces individuelles mesurées par les différents capteurs de force dépendent considérablement de la température ambiante dans le véhicule. En effet, à des températures très basses la mousse de rembourrage p.ex. devient très dure, ce qui fait que les forces mesurées par les capteurs sont inférieures aux forces réelles. D'autre part, à des températures très élevées, la mousse de rembourrage se dilate et exerce une pression complémentaire sur les capteurs de sorte que les forces mesurées par les capteurs sont supérieures aux forces agissant réellement. Il s'en suit que le dispositif de détection du poids d'un passager tel que décrit dans le document cité ne peut guère satisfaire aux exigences d'un système de protection moderne dont le fonctionnement doit être largement indépendant des conditions ambiantes.

L'objet de la présente invention est donc de proposer un dispositif pour déterminer plusieurs paramètres d'une personne assise sur un siège, dont le fonctionnement est largement indépendant de la température et de la tenue du passager sur ledit siège.

Conformément à l'invention, cet objectif est atteint par un dispositif permettant de déterminer la taille et/ou le poids d'une personne assise sur un siège qui fonctionne selon un principe différent des détecteurs de poids existants. La méthode utilisée pour déterminer la taille et/ou le poids d'une personne assise fonctionne selon un principe différent des détecteurs de poids existants. La méthode utilisée pour déterminer la taille et/ou le poids d'une personne assise sur un siège comprend la subdivision de la surface de siège en au moins deux sections, la détermination de la position du barycentre du poids actif dans chaque section, et l'évaluation de la taille et/ou du poids de ladite personne à partir desdites positions déterminées. On ne mesure donc plus la grandeur de la force exercée par le passager sur le siège mais on mesure des positions d'action de cette force. En d'autres mots, on mesure dorénavant des valeurs relatives au lieu de valeurs absolues. Les positions d'action de la force qu'on détermine ainsi sont donc largement indépendantes des facteurs affectant les valeurs absolues de la force, comme par exemple la tenue du passager sur son siège et la température ambiante. Les positions respectives des barycentres dans les différentes sections du siège permettent alors de déterminer la taille et/ou le poids de la personne ainsi que p.ex. sa position et/ou son orientation sur le siège.

En subdivisant le siège p.ex. en une pluralité de sections adjacentes et en déterminant les positions d'action du poids dans chacune de ces sections, on peut déterminer la surface totale sur laquelle le poids est actif, c'est-à-dire la surface du siège qui est occupée par le passager. De plus, on peut aisément déterminer la position du passager sur le siège à partir de la répartition des différentes positions des barycentres, ce qui permet d'évaluer si le passager est assis au milieu du siège. En comparant les positions longitudinales des barycentres dans différentes sections latéralement adjacentes du siège, on peut déterminer l'orientation du passager sur le siège, c'est-à-dire s'il est orienté dans la direction en avant ou dans une direction différente. Il est à noter que l'évaluation des différents paramètres se fait de préférence séquentiellement à l'aide d'un même détecteur.

Dans une version préférée de la méthode, la surface de siège est subdivisée en deux sections latéralement adjacentes et l'évaluation de la taille et/ou du poids comprend la détermination de la distance entre les positions des deux barycentres du poids dans lesdites deux sections. Le paramètre déterminé est du siège et la position d'action du poids sur la partie droite du siège, c'est-à-dire une distance qui est en corrélation avec la stature du passager. A partir de cette distance, on peut donc évaluer le poids et/ou la taille du passager en faisant appel à une modélisation de l'homme sur base de mesures statistiques.

Il est vrai qu'une méthode de détermination faisant appel à une modélisation de l'homme ne peut pas fournir une mesure exacte du poids réel de l'occupant du siège. Cependant, compte tenu du nombre restreint (p.ex. 3) des modes de fonctionnement des airbags ou des prétensionneurs de ceintures d'un véhicule, les exigences du dispositif de commande du système de protection en ce qui concerne l'exactitude de la valeur réelle du poids sont seulement d'ordre secondaire. Il suffit en effet de classifier les différents passagers en un nombre restreint de catégories de poids et de taille pour que le dispositif de commande puisse décider du mode de fonctionnement à appliquer, Dans l'exemple des trois modes de fonctionnement du système de protection, il faut trois catégories de poids qui doivent recouvrir en tout une plage allant par exemple de 0 à 100 kg, c'est-à-dire chaque catégorie doit recouvrir une plage d'environ 30 kg. Or, il est clair que pour une classification dans des catégories tellement larges, les résultats obtenus par évaluation du poids et/ou de la taille faisant appel à une modélisation de l'homme suffisent largement aux exigences d'exactitude du système.

Afin de travailler selon la méthode décrite ci-dessus, un dispositif pour déterminer la taille et/ou le poids d'une personne assise sur un siège comprend donc un moyen de détermination des positions respectives des barycentres du poids actif dans au moins deux sections différentes dudit siège et un moyen d'évaluation de la taille et/ou du poids de ladite personne à partir desdites positions déterminées. Les positions des barycentres ainsi déterminées donnent par exemple une indication de la surface totale sur laquelle le poids est actif, c'est-à-dire la surface du siège qui est occupée par le passager. Pour cela, il convient de subdiviser la surface de siège en un grand nombre de sections. Cependant, dans une exécution prétérée, ledit moyen de détermination des positions des barycentres comprend un moyen de détection de la distance entre un premier barycentre du poids sur une première section du siège et un deuxième barycentre du poids sur une deuxième section du siège, les deux sections du siège étant latéralement adjacentes. En d'autres mots, on mesure la distance latérale entre la position d'action du poids p.ex. sur la partie gauche du siège et la position d'action du poids sur la partie droite du siège, c'est-à-dire une distance qui est reliée à la largeur de la surface du siège occupée par le passager. Cette distance permet alors d'évaluer le poids et/ou la taille de la manière décrite ci-dessus.

Le moyen de détermination des positions des barycentres comprend de préférence un détecteur de force à résolution de position qui s'étend sur la surface de siège. Un tel détecteur comprend par exemple une pluralité d'éléments de commutation arrangés dans une pluralité de sections adjacentes du siège. Ces éléments de commutation sont alors interconnectés en matrice n x m de manière à être identifiables individuellement. Un tel détecteur nécessite cependant un grand nombre (≥ n·m) de connexions avec l'extérieur, c'est-à-dire avec le dispositif de commande du système de protection, et à l'intérieur du dispositif de commande, une électronique sophistiquée pour l'exploitation en temps réel des n·m signaux des différents éléments de commutation.

Dans une exécution avantageuse, ledit détecteur de force à résolution de position comprend plusieurs surfaces actives en forme de bandes, lesdites surfaces actives étant disposées de part et d'autre d'une ligne de séparation desdites deux sections et s'étendant parallèlement à celle-ci. Les surfaces actives en forme de bandes s'étendent alors avantageusement sur une majeure partie de la longueur de la surface de siège de sorte qu'une détermination de la largeur de la surface occupée par le passager est indépendante de sa position longitudinale sur le siège. Cette exécution réduit d'une part considérablement le nombre des connexions du détecteur avec l'extérieur et elle permet d'autre part l'utilisation d'une électronique moins sophistiquée pour l'exploitation en temps réel des signaux des surfaces actives.

De manière avantageuse, ledit détecteur de force comprend des capteurs de force dont la résistance électrique varie en fonction de la force appliquée. Ces capteurs de force sont connus sous le nom de FSR (force sensing resistor) et permettent de détecter directement la valeur de la force appliquée sur la surface active. Cette mesure directe de la force appliquée permet donc au dispositif selon l'invention de fonctionner en outre en détecteur d'occupation du siège. En d'autres mots, en dessous d'une certaine valeur de force mesurée par les FSR, qui correspond à un certain poids minimal agissant sur le siège, le système de protection n'est pas du tout déclenché pour le siège en question. Lors d'un choc accidentel, ce n'est que si la valeur limite de force est dépassée, que l'on procède à la détermination de la catégorie de poids du passager, et que le système de protection est déclenché.

A des fins de sécurité, le dispositif comprend avantageusement un circuit de contrôle de l'intégralité des conducteurs. Ce circuit surveille l'intégralité des conducteurs par exemple lors du démarrage de la voiture et signale une interruption éventuelle d'une connexion ou d'un conducteur au dispositif de commande du système de protection. Dans le cas d'une telle interruption qui risque d'affecter le fonctionnement correct du dispositif de détection, le dispositif de commande choisira un mode de fonctionnement standard du système de protection qui représente une solution de compromis pour toutes les catégories de poids.

D'autres particularités et caractéristiques de l'invention ressortiront de la description détaillée de quelques modes de réalisation avantageux présentés ci-dessous, à titre d'illustration, avec référence aux dessins annexés. Ceux-ci montrent:
- Fig.1:: un premier mode de réalisation d'un dispositif de détection de poids et/ou de taille selon l'invention;
- Fig.2:: un schéma illustrant le fonctionnement du détecteur à résolution de position;
- Fig.3:: un deuxième mode de réalisation d'un dispositif de détection de poids et/ou de taille selon l'invention;
- Fig.4:: un troisième mode de réalisation d'un dispositif de détection de poids et/ou de taille selon l'invention, permettant le contrôle de l'intégralité des conducteurs;
- Fig.5:: un autre mode de réalisation d'un dispositif de détection de poids et/ou de taille, capable de détecter également la position longitudinale et/ou l'orientation du passager sur le siège;
- Fig.6:: un schéma résumant les mesures possibles avec un détecteur selon la fig. 5, pour des modes de connexion différents des surfaces actives;
- Fig.7:: un mode de réalisation du détecteur de la fig. 5 permettant le contrôle de l'intégralité des conducteurs.

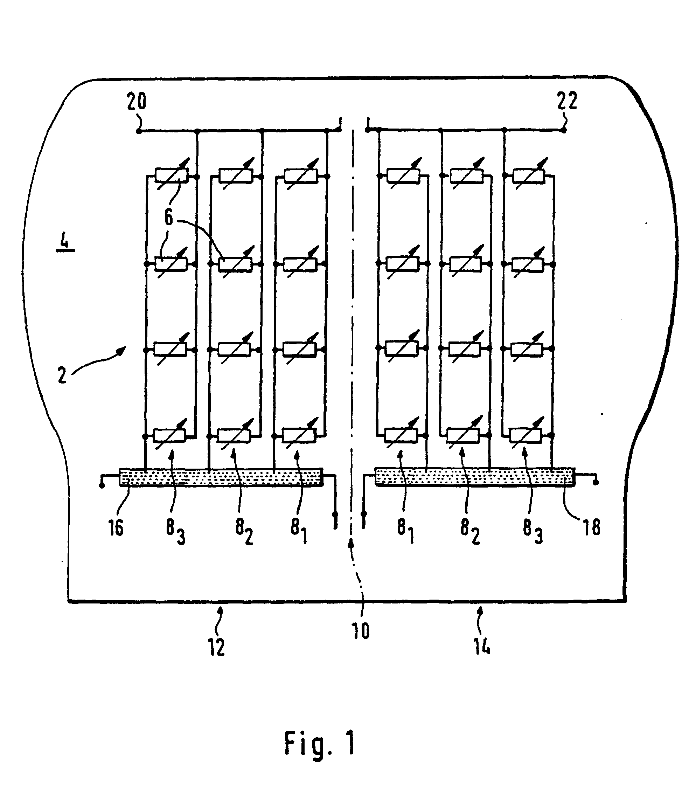

La fig. 1 montre une exécution préférée d'un dispositif de détection de poids et/ou de taille 2 qui est incorporé dans le rembourrage d'un siège 4 d'un véhicule. Il s'agit d'une exécution avec détecteur de force 2 à résolution de position qui est réalisé à l'aide de capteurs de force 6 à résistance variable du type FSR qui sont disposés sur un support flexible (non représenté). Ces capteurs FSR 6 sont représentés sur la figure par des résistances variables.

Un capteur FSR est décrit p.ex. dans le brevet US-A-4,489,302 et se compose de deux couches dont la première est formée d'un élément semi-conducteur et dont la deuxième présente deux peignes de conducteurs interdigités. A force nulle, les deux couches du capteur FSR sont distancées et la résistance entre les deux conducteurs est très élevée. Sous l'action d'une force, les deux conducteurs sont shuntés par la couche semi-conductrice et la résistance entre les deux conducteurs diminue en fonction de la force appliquée. Dans un autre type de capteurs FSR, deux conducteurs de forme quelconque sont séparés par une couche semi-conductrice intercalée. Sous l'action d'une force, les deux conducteurs et la couche semi-conductrice sont pressés ensemble et la résistance entre les deux conducteurs diminue en fonction de la force appliquée. Un tel capteur FSR est décrit p.ex. dans le brevet US-A-4,315,238.

Dans l'exemple de réalisation de la figure 1, plusieurs capteurs FSR 6 sont à chaque fois connectés pour former plusieurs surfaces actives 8 en forme de bandes qui s'étendent sur une grande partie de la longueur de la surface de siège. Etant donné la grande variabilité des dimensions avec lesquelles les capteurs FSR 6 peuvent être fabriqués, une telle surface active 8 en forme de bande peut également être constituée par un seul capteur FSR 6 en forme de bande.

Les surfaces actives 8 sont arrangées de part et d'autre d'une ligne de séparation 10 de la surface du siège et de manière symétrique à celle-ci. Cette ligne de séparation 10 subdivise la surface de siège en deux sections latéralement adjacentes 12, 14 et est de préférence une ligne de symétrie du siège 4. Afin de pouvoir mesurer la position du barycentre du poids dans chacune des sections, le nombre des surfaces actives 8 du détecteur de force 2 dans chacune des sections 12, 14 du siège 4 est supérieur ou égal à deux.

Le dispositif de l'exemple de la figure 1 comprend trois surfaces actives sur chaque section 12, 14 du siège 4 qui sont latéralement espacées de manière plus ou moins régulière. Les différentes surfaces actives 8 d'une section 12, 14 du siège 4 sont alimentées par des tensions électriques différentes, c'est-à-dire qu'un premier conducteur de chaque capteur FSR d'une surface active est connecté à la tension d'alimentation respective. La tension d'alimentation des surfaces actives 8 va en augmentant de l'intérieur du siège 4 vers l'extérieur. En d'autres mots, la surface active 8₁ située à l'intérieur du siège près de la ligne de symétrie 10 est connectée à une première tension d'alimentation T₁, la surface active 8₂ située au milieu de chaque section 12 resp.14 est connectée à une deuxième tension d'alimentation T₂ et la surface active 8₃ située à l'extérieur près du bord du siège 4 est connectée à une troisième tension d'alimentation T₃, avec T₁<T₂<T₃. Afin de réduire le nombre des connexions extérieures, les différentes tensions T₁, T₂, T₃ nécessaires à l'alimentation des trois surfaces actives 8₁, 8₂, 8₃ de chaque section 12, 14 sont de préférence fournies par une résistance linéaire 16, 18 ou par une chaîne de résistances branchées en série, aux bornes de laquelle on applique une différence de potentiel de manière à créer un gradient de potentiel. Les différentes surfaces actives 8₁, 8₂, 8₃ sont alors connectées à des tensions différentes suivant leur position de branchement sur la résistance linéaire 16, 18.

Par leur deuxième conducteur, les capteurs FSR 6 sont connectés à une ligne de sortie 20 resp. 22 du détecteur 2. Le montage ainsi réalisé correspond à un potentiomètre linéaire dont le curseur fonctionne en diviseur de tension entre les bornes de la résistance linéaire 16, 18. Les résistances des différentes surfaces actives 8₁, 8₂, 8₃ diminuant en fonction de la force avec laquelle les surfaces actives sont déclenchées, la tension sur la sortie 20 resp. 22 prend une valeur qui correspond à une moyenne pondérée des trois tensions d'alimentation T₁, T₂, T₃, la pondération se faisant à l'aide des résistances relatives des surfaces actives. En d'autres mots, plus une surface active est sollicitée, plus la tension d'alimentation respective contribue à la tension de sortie. Il est à noter qu'une telle pondération tient également compte de la répartition en longueur du poids, c'est-à-dire qu'elle prend en considération la longueur sur laquelle les différentes surfaces actives sont sollicitées. En effet, la résistance d'une surface active diminue en fonction du nombre sollicité de ses capteurs FSR et dès lors la surface active effectue en principe une intégration de la force par rapport à la surface d'action de la force. Ainsi la tension mesurée à la sortie 20 resp. 22 donne une indication directe de la position du barycentre du poids dans la section respective. Il est clair qu'en raison de l'augmentation des tensions d'alimentation de l'intérieur du siège vers l'extérieur T₁<T₂<T₃, la tension à la sortie 20 resp. 22 sera d'autant plus grande que le barycentre se situe plutôt vers l'extérieur. En d'autres mots, plus la surface occupée par le passager sur son siège est large, plus les tensions aux lignes de sortie 20 et 22 sont élevées.

En mesurant les tensions aux deux lignes de sortie 20 et 22, on connaît les positions des barycentres du poids dans les deux sections du siège 4 et on peut ainsi facilement calculer la distance entre ces deux barycentres. Il faut noter qu'il est également possible de relier les deux lignes de sortie 20 et 22 afin d'additionner les deux tensions de sortie des deux sections du siège. On obtient ainsi un signal de sortie qui est directement proportionnel à la distance entre les deux barycentres du poids. Cette exécution permet de réduire le nombre des connexions extérieures. On perd cependant les informations concernant la répartition de la surface occupée sur les deux sections 12 et 14.

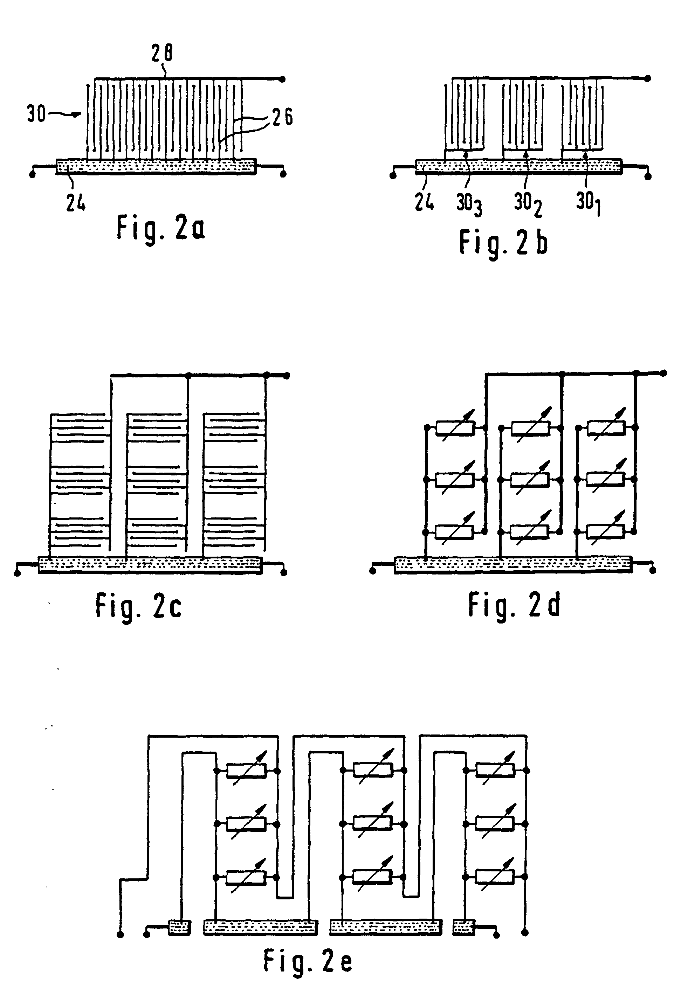

La figure 2 sert à illustrer schématiquement la connexion en potentiomètre linéaire des trois surfaces actives. On part d'un simple potentiomètre linéaire qui est réalisé à l'aide d'un capteur de force FSR (fig. 2.a). Un tel montage en potentiomètre linéaire est par exemple décrit dans le document US-A-4,810,992. Il comprend une résistance linéaire 24 aux bornes de laquelle on applique différentes tensions de manière à créer un gradient de potentiel. A intervalles réguliers, des connecteurs 26 s'étendant latéralement sont reliés à ladite résistance linéaire 24. Le curseur 28 du potentiomètre est formé par un deuxième conducteur en forme de peigne dont les dents s'étendent entre les connecteurs 26. En court-circuitant les deux connecteurs 26 et 28 à un certain endroit, le conducteur 28 est soumis à une tension qui varie linéairement avec la position du conducteur 26 sur la résistance linéaire 24. Afin de créer plusieurs surfaces actives séparées, on partage ensuite la surface active 30 du potentiomètre en plusieurs zones 30₁, 30₂, 30₃ (fig. 2.b). Ces zones actives 30₁, 30₂, 30₃ sont rallongées afin de former des surfaces actives en forme de bandes qui s'étendent sur presque toute la longueur de siège (fig. 2.c) et qui sont symbolisées par des résistances variables connectées en série (fig. 2.d). Si l'on souhaite disposer d'une possibilité de contrôler l'intégralité des conducteurs, on modifie les conducteurs de façon à ce qu'ils forment des boucles présentant des connexions externes (fig. 2.e).

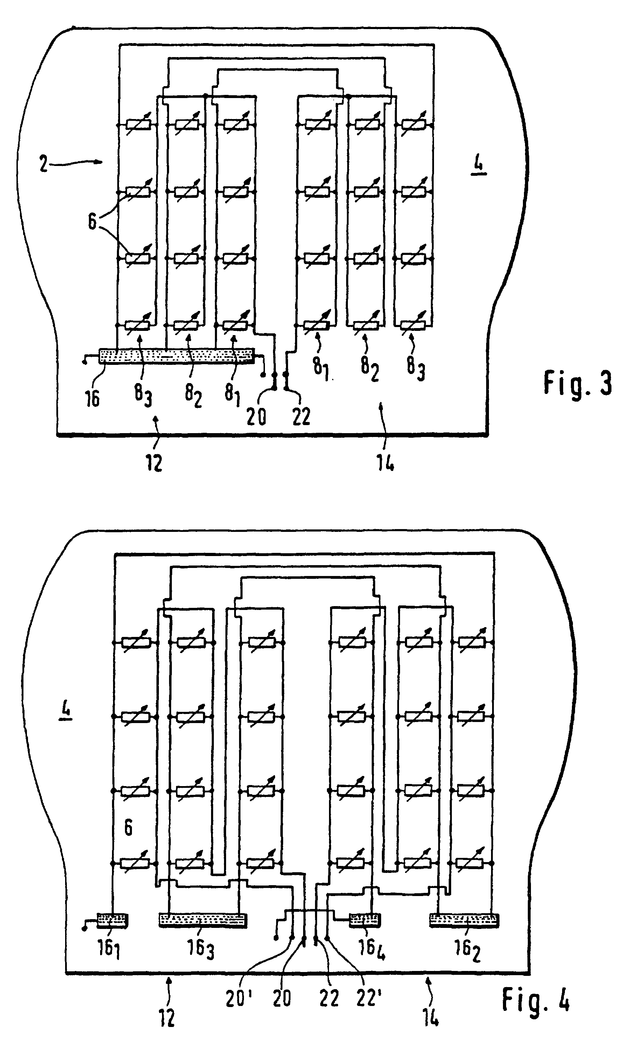

La figure 3 représente une exécution simplifiée du détecteur de la figure 1, qui permet de réduire davantage le nombre des connexions nécessaires avec l'extérieur. Le détecteur 2 ne comprend plus qu'une seule résistance linéaire 16 aux bornes de laquelle on applique une différence de tension afin d'alimenter les différentes surfaces actives 8₁, 8₂, 8₃ des deux sections 12 et 14 du siège 4. Chacune des surfaces actives 8₁, 8₂, 8₃ de la section 14 du siège 4 est à cet effet connectée à la surface active 8₁, 8₂, 8₃ respective de la section 12, de sorte que les deux surfaces 8₁ sont alimentées par la même tension électrique T₁, que les deux surfaces 8₂ sont alimentées par la même tension électrique T₂ et que les deux surfaces 8₃ sont alimentées par la même tension électrique T₃.

Dans cette exécution, le nombre des connexions extérieures est réduit à quatre, à savoir les deux bornes de la résistance linéaire 16 et les deux lignes de sortie 20 et 22. On peut même réduire le nombre des connexions nécessaires à trois en reliant les deux sorties 20 et 22. Cependant comme décrit ci-dessus, on perd de cette manière les informations concernant la répartition du poids sur les deux sections 12 et 14.

Une autre exécution d'un dispositif pour déterminer la taille et/ou le poids selon l'invention est représentée sur la figure 4. Il s'agit d'une exécution qui permet de contrôler l'intégralité des différents conducteurs. A cet effet, tous les conducteurs reliant les différents capteurs FSR 6 entre eux ou avec la résistance linéaire 16 sont disposés de manière à former des boucles qui présentent des connexions externes. Afin de limiter le nombre de ces connexions externes, la résistance linéaire 16 est par exemple subdivisée en plusieurs résistances discrètes 16₁, 16₂, 16₃, 16₄, qui sont disposées de part et d'autre de la ligne de séparation des deux sections de manière à permettre l'alimentation de toutes les surfaces actives 8₁, 8₂, 8₃ des deux sections 12 et 14 par une seule boucle. On arrive à un total de six connexions extérieures étant donné que chacune des lignes de sortie 20, 22 est formée par une boucle et présente deux connections 20, 20' resp. 22 et 22'.

Le contrôle de l'intégralité des conduites peut se faire alors par injection d'un signal dans une première connexion de chaque boucle et par détection du signal sur la deuxième connexion. Il est de préférence réalisé par le dispositif de commande du système de protection du véhicule. Lorsque sur une des connexions de sortie des différentes boucles, le dispositif de commande ne détecte pas le signal injecté sur l'autre connexion, il choisit un mode de fonctionnement standard du système de protection qui représente une solution de compromis pour toutes les catégories de poids.

Il est à noter que pour cette exécution, il est également possible de réduire davantage le nombre des connexions au détriment des informations de répartition du poids en reliant les deux lignes de sortie 20 et 22 et en ne laissant sortir que les connexions 20' et 22'.

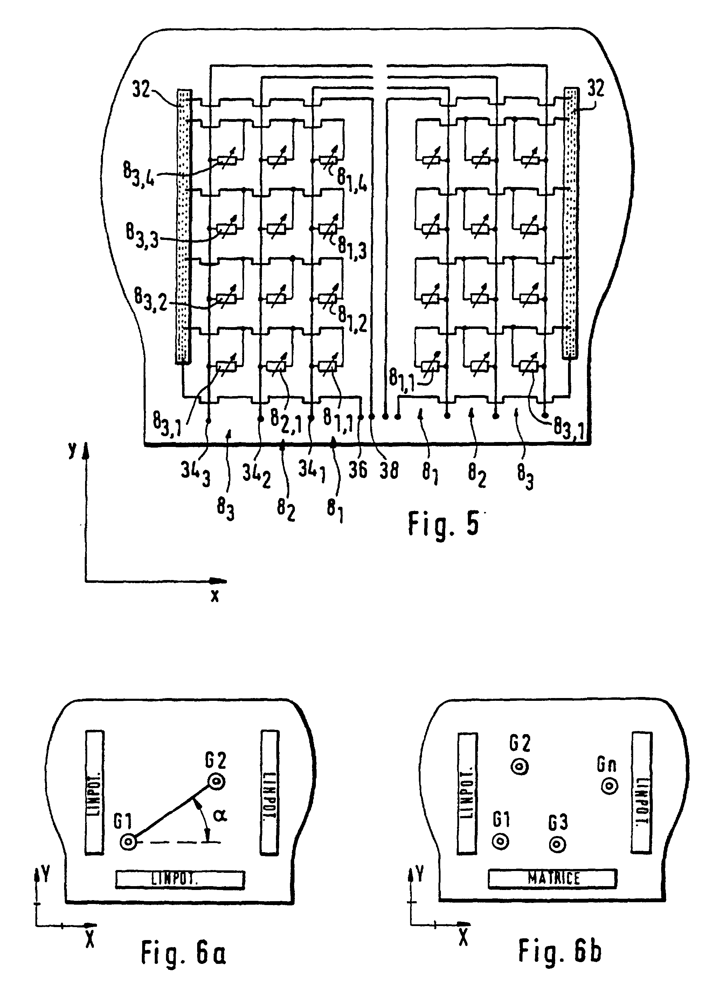

La Fig. 5 représente une exécution d'un dispositif 2 pour détecter plusieurs paramètres d'une personne assise sur un siège 4, avec lequel on peut séquentiellement détecter les positions latérales (en direction x) et longitudinales (en direction y) des barycentres du poids actif dans les différentes sections du siège. Ce dispositif permet donc selon le mode de fonctionnement de détecter aussi bien la taille et/ou le poids de la personne que sa position longitudinale et/ou l'orientation de la personne sur le siège.

A cette fin, chaque surface active 8₁, 8₂, 8₃ comprend plusieurs capteurs individuels 8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4}, qui sont disposés l'un derrière l'autre en direction longitudinale du siège et qui sont interconnectés sur une de leurs bornes par l'intermédiaire d'une résistance linéaire 32 ou d'une chaîne de résistances discrètes branchées en série. Sur l'autre borne, les capteurs individuels 8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4} de chaque surface active 8₁, 8₂, 8₃ sont interconnectés par l'intermédiaire d'un conducteur 34₁, 34₂, resp. 34₃.

Dans un premier mode de fonctionnement, le mode détermination taille/poids, on applique sur chaque section 12, 14 du siège 4 des tensions différentes T₁, T₂, T₃ aux conducteurs 34₁, 34₂, 34₃ des différentes surfaces actives 8₁, 8₂, 8₃ de chaque section 12 resp. 14, de telle sorte que T₁<T₂<T₃ et on mesure le signal de sortie sur l'une des bornes 36 ou 38 de la résistance linéaire 32. Afin de diminuer les effets de la résistance 32 interconnectant les différents capteurs individuels 8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4} sur les tensions mesurées, les bornes 36 et 38 sont connectées ensemble de telle sorte que la résistance 32 soit branchée dans une boucle fermée.

Le détecteur 2 branché de cette manière fonctionne alors de manière semblable au détecteur de la fig. 1. Le montage réalisé correspond à un potentiomètre linéaire dont le curseur fonctionne en diviseur de tension entre tensions T₁, T₂ et T₃. Les résistances des différentes surfaces actives 8₁, 8₂, 8₃ diminuant en fonction de la force avec laquelle les surfaces actives sont déclenchées, la tension sur la sortie 36 resp. 38 prend une valeur qui correspond à une moyenne pondérée des trois tensions d'alimentation T₁, T₂, T₃, la pondération se faisant à l'aide des résistances relatives des surfaces actives.

Il est à noter que pour ce mode de fonctionnement, les trois tensions d'alimentation T₁, T₂, T₃ peuvent soit être alimentées directement sur les conducteurs 34₁, 34₂, 34₃ par le dispositif de commande du système (non représenté), soit être fournies par une résistance linéaire ou par une chaîne de résistances branchées en série aux bornes de laquelle on applique une différence de potentiel de manière à créer un gradient de potentiel (voir fig.1). Les différentes surfaces actives 8₁, 8₂, 8₃ sont alors connectées à des tensions différentes suivant leur position de branchement sur la résistance linéaire.

Dans le deuxième mode de fonctionnement, le mode détection position/orientation, les capteurs individuels 8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4} de chaque surface active sont alimentés par des tensions électriques différentes, de sorte que la tension d'alimentation augmente vers l'arrière du siège. Cette alimentation en tensions différentes se fait préférentiellement en appliquant une différence de potentiel aux bornes 36 et 38 de la résistance 32. Les différents capteurs individuels 8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4} sont alors connectés à des tensions différentes suivant leur position de branchement sur la résistance linéaire 32. Les positions de branchement des capteurs individuels correspondants 8_{1,1}, 8_{2,1}, 8_{3,1}, resp. 8_{1,2}, 8_{2,2}, 8_{3,2}, resp. 8_{1,3}, 8_{2,3}, 8_{3,3}, resp. 8_{1,4}, 8_{2,4}, 8_{3,4} des différentes surfaces actives 8₁, 8₂, resp. 8₃ sont avantageusement les mêmes de sorte que ces capteurs individuels correspondants 8_{1,1}, 8_{2,1}, 8_{3,1}, resp. 8_{1,2}, 8_{2,2}, 8_{3,2}, resp. 8_{1,3}, 8_{2,3}, 8_{3,3}, resp. 8_{1,4}, 8_{2,4}, 8_{3,4} sont alimentés par la même tension électrique.

Dans ce mode de fonctionnement, on mesure alors avantageusement les tensions de sortie des différentes surfaces actives 8₁, 8₂, resp. 8₃ sur les conducteurs 34₁, 34₂, 34₃. Les surfaces actives 8₁, 8₂, 8₃ de chaque section 12 resp. 14 sont donc connectées en matrice, c'est-à-dire qu'on mesure séparément la tension de sortie sur chaque ligne de sortie 34₁, 34₂, 34₃ de chacune des surfaces actives 8₁, 8₂, 8₃. Le montage ainsi réalisé pour chaque surface active 8₁, 8₂, resp. 8₃ correspond à un potentiomètre linéaire dont le curseur fonctionne en diviseur de tension entre les bornes de la résistance linéaire 32. Les résistances des différents capteurs individuels 8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4} diminuant en fonction de la force avec laquelle les capteurs sont déclenchés, les tensions sur les conducteurs 34₁, 34₂, 34₃ prennent des valeurs qui correspondent à une moyenne pondérée des tensions d'alimentation des différents capteurs individuels 8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4} des surfaces actives respectives, la pondération se faisant à l'aide des résistances relatives des capteurs individuels. En d'autres mots, plus un capteur individuel est sollicité, plus sa tension d'alimentation respective contribue à la tension de sortie sur le conducteur 34₁, 34₂, 34₃ respectif.

Les tensions d'alimentation des capteurs individuels augmentant de l'avant du siège vers l'arrière, on obtient ainsi à chaque conducteur 34₁, 34₂, 34₃ une tension de sortie qui est d'autant plus élevée que la personne est plus assise en arrière du siège. Ces tensions de sortie sont donc représentatives des positions longitudinales des barycentres du poids actif dans les différentes surfaces actives en forme de bande 8₁, 8₂, resp. 8₃. A partir de la répartition de ces positions longitudinales sur le siège, on peut alors facilement définir la position longitudinale du passager sur le siège ou son orientation sur le siège. En effet, des tensions très basses mesurées sur les conducteurs des deux sections indiquent que la personne est plutôt assise sur le bord avant du siège 4. D'autre part, une répartition fortement dissymétrique des positions sur les deux sections du siège permet de conclure d'une orientation différente de celle de la direction en avant et de commander l'airbag de la voiture en conséquence.

En mesurant séquentiellement selon les deux modes de fonctionnement décrits du détecteur, il devient dès lors possible de mesurer avec un seul détecteur aussi bien la taille et/ou le poids de la personne assise sur le siège que sa position et son orientation par rapport au siège. La commutation entre les deux modes de fonctionnement pouvant se faire plusieurs fois par seconde, on peut alors détecter pratiquement en temps réel tous les changements de position du passager sur le siège et adapter le déploiement de l'airbag en conséquence.

Une alternative du mode détection position/orientation consiste à brancher les trois conducteurs 34₁, 34₂, 34₃ ensemble et à ne mesurer que la tension résultante. Cette alternative s'applique surtout dans le cas où les trois surfaces actives sont alimentées, en mode détection taille/poids, par l'intermédiaire d'une résistance linéaire comme décrit plus haut et semblable à l'exécution de la fig. 1. Dans ce cas, les bornes de la résistance linéaire interconnectant les surfaces actives sont branchées ensemble et on mesure la tension appliquée à cette boucle fermée. Selon le mode de connexion des surfaces actives, on peut encore distinguer deux mesures de position différentes qui sont représentées schématiquement sur la figure 6.

Dans le cas d'une alimentation des surfaces actives par l'intermédiaire d'une résistance linéaire (fig. 6.a), on ne mesure donc pas les positions relatives des barycentres du poids actif sur chaque surface active 8₁, 8₂, resp. 8₃ mais seulement les positions des barycentres du poids actif sur chaque section 12, 14. Cette réalisation permet cependant de mesurer la distance réelle entre les deux barycentres du poids actif dans les deux sections en tenant compte de leurs positions longitudinales. Par comparaison, avec les dispositifs selon la fig. 1 on ne mesure que (x₁-x₂)·cos α (x₁ et x₂ représentant les positions latérales des Barycentres G₁ et G₂ dans les deux sections du siège). De plus, la différence des positions longitudinales permet de déterminer l'orientation du passager sur le siège, soit ici une orientation dans une direction qui dévie de la direction en avant d'un angle α.

Dans le cas d'une connexion en matrice des différentes surfaces actives (fig. 6.b), on mesure en mode détection position/orientation les positions relatives des barycentres G₁ ... Gₙ du poids actif sur chaque surface active 8₁, 8₂, resp. 8₃. La répartition de ces positions G₁ ... Gₙ par rapport au siège permet toujours de définir la position et l'orientation du passager sur le siège. Ce mode de fonctionnement présente l'avantage de pouvoir détecter des situations anormales, comme p.ex. lorsqu'un enfant ne s'appuie que sur ses mains ou lorsqu'éventuellement un siège auxiliaire ne prend appui que sur des pieds latéraux. Dans ce cas, le détecteur ne détecte une sollicitation que pour les surfaces actives extérieures 8₃, les surfaces actives intérieures 8₁ et 8₂ ne donnant pas de signal, et le déploiement des airbags peut être empêché.

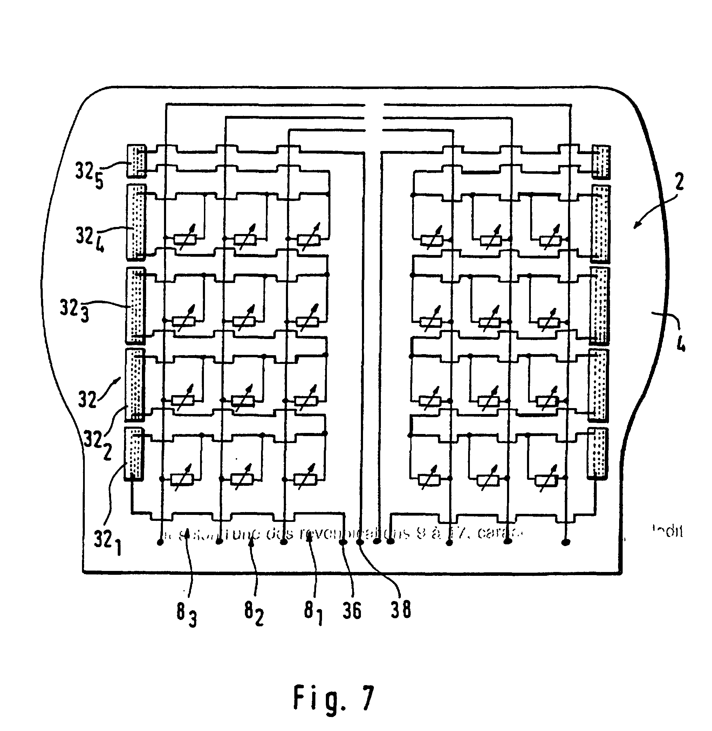

La figure 7 représente un mode de réalisation du détecteur de la fig. 5 permettant le contrôle de l'intégralité des conducteurs. A cet effet, tous les conducteurs reliant les différents capteurs individuels 8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4} de chaque section 12, 14 entre eux ou avec la résistance linéaire 32 sont disposés de manière à former une boucle qui présente des connexions externes, p.ex. les bornes 36 et 38. Ceci est réalisé par une subdivision de la résistance linéaire 32 en plusieurs résistances discrètes 32₁, 32₂, 32₃, 32₄, 32₅ qui sont reliées entre elles par les conducteurs alimentant les capteurs individuels.

Le contrôle de l'intégralité des conduites peut se faire alors par injection d'un signal dans une des bornes 36 resp. 38 de la résistance 32 et par détection du signal sur la deuxième borne 38 resp. 36. Il est de préférence réalisé par le dispositif de commande du système de protection du véhicule. Lorsque le dispositif de commande ne détecte pas le signal injecté, il choisit un mode de fonctionnement standard du système de protection qui représente une solution de compromis pour toutes les catégories de poids.

## Revendications

1. Dispositif pour déterminer la taille et/ou le poids d'une personne assise sur un siège (4), **caractérisé par** un moyen de détermination des positions respectives des barycentres du poids actif dans au moins deux sections (12, 14) différentes dudit siège (4), ledit moyen de détermination déterminant les positions d'action de la force exercée par ladite personne sur chacune des sections dudit siège, et un moyen d'évaluation de la taille et/ou du poids de ladite personne à partir desdites positions respectives déterminées.

2. Dispositif selon la revendication 1, **caractérisé en ce que** ledit moyen de détermination des positions des barycentres comprend un moyen de détection de la distance entre un premier barycentre du poids sur une première section (12) du siège (4) et un deuxième barycentre du poids sur une deuxième section (14) du siège (4), les deux sections du siège (4) étant latéralement adjacentes.

3. Dispositif selon la revendication 1 ou 2, **caractérisé en ce que** ledit moyen de détermination des positions des barycentres comprend un détecteur de force (2) à résolution de position qui s'étend sur la surface de siège (4).

4. Dispositif selon la revendication 3, **caractérisé en ce que** ledit détecteur de force (2) à résolution de position comprend plusieurs surfaces actives en forme de bande (8₁, 8₂, 8₃). lesdites surfaces actives (8₁, 8₂, 8₃) étant disposées de part et d'autre d'une ligne de séparation (10) desdites deux sections (12, 14) et s'étendant parallèlement à celle-ci.

5. Dispositif selon la revendication 4, **caractérisé en ce que** dans un premier mode de fonctionnement, les différentes surfaces actives (8₁, 8₂, 8₃) d'une section (12, 14) du siège (4) sont alimentées par des tensions électriques différentes.

6. Dispositif selon la revendication 5, **caractérisé en ce qu'**à chaque fois une surface active de ladite première section du siège (4) et la surface active correspondante de ladite deuxième section du siège (4) sont alimentées par la même tension électrique.

7. Dispositif selon l'une des revendications 4 à 6, **caractérisé en ce que** l'alimentation des surfaces actives d'une section est réalisée au moyen d'un gradient de potentiel à travers plusieurs résistances branchées en série de sorte que le montage des surfaces actives représente un montage en potentiomètre linéaire.

8. Dispositif selon l'une des revendications 4 à 7, **caractérisé en ce que** chaque surface active (8₁, 8₂, 8₃) comprend plusieurs capteurs individuels (8_{1,1}, 8_{1,2}, 8_{1,3}, 8_{1,4}, resp. 8_{2,1}, 8_{2,2}, 8_{2,3}, 8_{2,4}, resp, 8_{3,1}, 8_{3,2}, 8_{3,3}, 8_{3,4}), qui sont disposés en ligne en direction longitudinale du siège,

9. Dispositif selon la revendication 8, **caractérisé en ce que** dans un deuxième mode de fonctionnement, les capteurs individuels (8_{1,1}, 8_{1,2}, 8_{1,3}, 8_{1,4}, resp, 8_{2,1}, 8_{2,2}, 8_{2,3}, 8_{2,4}, resp. 8_{3,1}, 8_{3,2}, 8_{3,3}, 8_{3,4}) de chaque surface active sont alimentés par des tensions électriques différentes.

10. Dispositif selon la revendication 9, **caractérisé en ce que** les capteurs individuels correspondants (8_{1,1}, 8_{2,1}, 8_{3,1}, resp. 8_{1,2}, 8_{2,2}, 8_{3,2}, resp. 8_{1,3}, 8_{2,3}, 8_{3,3}, resp. 8_{1,4}, 8_{2,4}, 8_{3,4}) des différentes surfaces actives d'une section sont alimentés par la même tension électrique.

11. Dispositif selon l'une des revendications 9 à 10, **caractérisé en ce que** l'alimentation des capteurs individuels (8_{1,1}, 8_{1,2}, 8_{1,3}, 8_{1,4}, resp. 8_{2,1}, 8_{2,2}, 8_{2,3}, 8_{2,4}, resp. 8_{3,1}, 8_{3,2}, 8_{3,3}, 8_{3,4}) d'une section (12, 14) est réalisée au moyen d'un gradient de potentiel à travers une résistance linéaire (32) ou plusieurs résistances branchées en série (32₁, 32₂, 32₃, 32₄, 32₅) de sorte que le montage des capteurs individuels représente un montage en potentiomètre linéaire.

12. Dispositif selon l'une des revendications 3 à 11, **caractérisé en ce que** ledit détecteur de force (2) comprend des capteurs de force (6) dont la résistance électrique varie en fonction de la force appliquée.

13. Dispositif selon l'une des revendications 1 à 12, **caractérisé par** un circuit de contrôle de l'intégralité des conducteurs.

14. Dispositif selon l'une des revendications 1 à 13, **caractérisé en ce que** ledit moyen de détermination des positions des barycentres est incorporé dans le coussin du siège (4).

15. Méthode pour déterminer la taille et/ou le poids d'une personne assise sur un siège, **caractérisée par** les étapes
subdiviser la surface de siège (4) en au moins deux sections
déterminer la position respective du barycentre du poids actif dans chaque section, à savoir déterminer les positions d'action de la force exercée par ladite personne sur chacune des sections dudit siège, et
évaluer la taille et/ou le poids de ladite personne à partir desdites positions respectives déterminées.

16. Méthode selon la revendication 15, **caractérisé en ce que** la surface de siège est subdivisée en deux sections latéralement adjacentes, et **en ce que** l'évaluation de la taille et/ou du poids comprend la détermination de la distance entre les positions des deux barycentres du poids dans lesdites deux sections.

17. Méthode selon l'une des revendications 15 à 16, **caractérisé par** l'étape supplémentaire de l'évaluation de la position de ladite personne sur ledit siège à partir de la répartition des positions des barycentres sur le siège.

18. Méthode selon l'une des revendications 15 à 17, **caractérisé par** l'étape supplémentaire de l'évaluation de l'orientation de ladite personne sur ledit siège à partir des positions longitudinales des barycentres du poids actif dans chaque section.

19. Méthode selon l'une des revendications 17 ou 18, **caractérisé en ce que** l'évaluation des différents paramètres est exécutée séquentiellement.

20. Utilisation d'un dispositif selon l'une des revendications 1 à 14 dans la commande d'un airbag d'un véhicule automobile.

## Patentansprüche

1. Vorrichtung zur Bestimmung der Größe und/oder des Gewichts einer auf einem Sitz (4) sitzenden Person, **gekennzeichnet durch** ein Mittel zur Bestimmung der jeweiligen Schwerpunktlagen des aktiven Gewichts in mindestens zwei verschiedenen Abschnitten (12, 14) des Sitzes (4), wobei das Mittel zur Bestimmung die Wirkungslagen der Kraft bestimmt, die von der Person auf jeden der Abschnitte des Sitzes ausgeübt wird, und ein Mittel zur Ermittlung der Größe und/oder des Gewichts der Person aus den jeweiligen bestimmten Lagen.

2. Vorrichtung nach Anspruch 1, **dadurch gekennzeichnet, dass** das Mittel zur Bestimmung der Schwerpunktlagen ein Mittel zur Erfassung des Abstands zwischen einem ersten Schwerpunkt des Gewichts auf einem ersten Abschnitt (12) des Sitzes (4) und einem zweiten Schwerpunkt des Gewichts auf einem zweiten Abschnitt (14) des Sitzes (4) umfasst, wobei die beiden Abschnitte des Sitzes (4) seitlich benachbart sind.

3. Vorrichtung nach Anspruch 1 oder 2, **dadurch gekennzeichnet, dass** das Mittel zur Bestimmung der Schwerpunktlagen einen Kraftdetektor (2) mit Positionsauflösung umfasst, der sich über die Sitzfläche (4) erstreckt.

4. Vorrichtung nach Anspruch 3, **dadurch gekennzeichnet, dass** der Kraftdetektor (2) mit Positionsauflösung mehrere streifenförmige Nutzflächen (8₁, 8₂, 8₃) umfasst, wobei die Nutzflächen (8₁, 8₂, 8₃) beiderseits einer Trennlinie (10) der beiden Abschnitte (12, 14) angeordnet sind und zu dieser parallel verlaufen.

5. Vorrichtung nach Anspruch 4, **dadurch gekennzeichnet, dass** bei einer ersten Funktionsart die einzelnen Nutzflächen (8₁, 8₂, 8₃) eines Abschnitts (12, 14) des Sitzes (4) mit unterschiedlichen elektrischen Spannungen versorgt werden.

6. Vorrichtung nach Anspruch 5, **dadurch gekennzeichnet, dass** jeweils eine Nutzfläche des ersten Abschnitts des Sitzes (4) und die entsprechende Nutzfläche des zweiten Abschnitts des Sitzes (4) mit der gleichen elektrischen Spannung versorgt werden.

7. Vorrichtung nach einem der Ansprüche 4 bis 6, **dadurch gekennzeichnet, dass** die Versorgung der Nutzflächen eines Abschnitts mittels eines Potentialgradienten durch mehrere in Reihe geschaltete Widerstände hindurch erfolgt, so dass die Schaltung der Nutzflächen eine lineare Potentiometerschaltung darstellt.

8. Vorrichtung nach einem der Ansprüche 4 bis 7, **dadurch gekennzeichnet, dass** jede Nutzfläche (8₁, 8₂, 8₃) mehrere Einzelsensoren (8_{1,1}, 8_{1,2}, 8_{1,3}, 8_{1,4} bzw. 8_{2,1}, 8_{2,2}, 8_{2,3}, 8_{2,4} bzw. 8_{3,1}, 8_{3,2}, 8_{3,3}, 8_{3,4}) umfasst, die in Längsrichtung des Sitzes in Reihe angeordnet sind.

9. Vorrichtung nach Anspruch 8, **dadurch gekennzeichnet, dass** bei einer zweiten Funktionsart die Einzelsensoren (8_{1,1}, 8_{1,2}, 8_{1,3}, 8_{1,4} bzw. 8_{2,1}, 8_{2,2}, 8_{2,3}, 8_{2,4} bzw. 8_{3,1}, 8_{3,2}, 8_{3,3}, 8_{3,4}) jeder Nutzfläche mit unterschiedlichen elektrischen Spannungen versorgt werden.

10. Vorrichtung nach Anspruch 9, **dadurch gekennzeichnet, dass** die entsprechenden Einzelsensoren (8_{1,1}, 8_{2,1}, 8_{3,1} bzw. 8_{1,2}, 8_{2,2}, 8_{3,2} bzw. 8_{1,3}, 8_{2,3}, 8_{3,3} bzw. 8_{1,4}, 8_{2,4}, 8_{3,4}) der einzelnen Nutzflächen eines Abschnitts mit der gleichen elektrischen Spannung versorgt werden.

11. Vorrichtung nach einem der Ansprüche 9 bis 10, **dadurch gekennzeichnet, dass** die Versorgung der Einzelsensoren (8_{1,1}, 8_{1,2}, 8_{1,3}, 8_{1,4} bzw. 8_{2,1}, 8_{2,2}, 8_{2,3}, 8_{2,4} bzw. 8_{3,1}, 8_{3,2}, 8_{3,3}, 8_{3,4}) eines Abschnitts (12, 14) mittels eines Potentialgradienten durch einen linearen Widerstand (32) oder mehrere in Reihe geschaltete Widerstände (32₁, 32₂, 32₃, 32₄, 32₅) hindurch erfolgt, so dass die Schaltung der Einzelsensoren eine lineare Potentiometerschaltung darstellt.

12. Vorrichtung nach einem der Ansprüche 3 bis 11, **dadurch gekennzeichnet, dass** der Kraftdetektor (2) Kraftsensoren (6) aufweist, deren elektrischer Widerstand in Abhängigkeit von der ausgeübten Kraft schwankt.

13. Vorrichtung nach einem der Ansprüche 1 bis 12, **gekennzeichnet durch** einen Prüfstromkreis für sämtliche Leiter.

14. Vorrichtung nach einem der Ansprüche 1 bis 13, **dadurch gekennzeichnet, dass** das Mittel zur Bestimmung der Schwerpunktlagen im Kissen des Sitzes (4) eingebettet ist.

15. Verfahren zur Bestimmung der Größe und/oder des Gewichts einer auf einem Sitz sitzenden Person, **gekennzeichnet durch** die Schritte:
Unterteilen der Sitzfläche (4) in mindestens zwei Abschnitte,
Bestimmen der jeweiligen Schwerpunktlage des aktiven Gewichts in jedem Abschnitt, d.h. Bestimmung der Wirkungslagen der Kraft, die von der Person auf jeden der Abschnitte des Sitzes ausgeübt wird, und
Ermitteln der Größe und/oder des Gewichts der Person aus den jeweiligen bestimmten Lagen.

16. Verfahren nach Anspruch 15, **dadurch gekennzeichnet, dass** die Sitzfläche in zwei seitlich benachbarte Abschnitte unterteilt wird und dass die Ermittlung der Größe und/oder des Gewichts die Bestimmung des Abstands zwischen den Lagen der beiden Schwerpunkte des Gewichts in den beiden Abschnitten umfasst.

17. Verfahren nach einem der Ansprüche 15 bis 16, **gekennzeichnet durch** den zusätzlichen Schritt der Ermittlung der Position der Person auf dem Sitz aus der Verteilung der Schwerpunktlagen auf dem Sitz.

18. Verfahren nach einem der Ansprüche 15 bis 17, **gekennzeichnet durch** den zusätzlichen Schritt der Ermittlung der Ausrichtung der Person auf dem Sitz aus den Längslagen der Schwerpunkte des aktiven Gewichts in jedem Abschnitt.

19. Verfahren nach einem der Ansprüche 17 oder 18, **dadurch gekennzeichnet, dass** die Ermittlung der einzelnen Parameter sequentiell erfolgt.

20. Verwendung einer Vorrichtung nach einem der Ansprüche 1 bis 14 im Airbag-Steuersystem eines Kraftfahrzeugs.

## Claims

1. Device for determining the size and/or the weight of a person sitting on a seat (4), **characterised by** a means for determining the respective positions of the centres of gravity of the active weight in at least two different sections (12, 14) of the said seat (4), said means for determining the positions at which the force exerted by said person acts on each of said sections of said seat, and a means for evaluating the size and/or the weight of the said person from the said respective positions so determined.

2. Device according to Claim 1, **characterised in that** the said means for determining the positions of the centres of gravity comprises a means for detecting the distance between a first centre of gravity of the weight on a first section (12) of the seat (4) and a second centre of gravity of the weight on a second section (14) of the seat (4), the two sections of the seat (4) being laterally adjacent.

3. Device according to Claim 1 or 2, **characterised in that** the said means for determining the position of the centres of gravity comprises a position-defining force detector (2) which extends over the surface of the seat (4).

4. Device according to Claim 3, **characterised in that** the said position-defining force detector (2) comprises several strip-shaped active areas (8₁, 8₂, 8₃), the said active areas (8₁, 8₂, 8₃) being located on both sides of a line of separation (10) of the said two sections (12, 14) and extending parallel to the said line.

5. Device according to Claim 4, **characterised in that**, in a first operational mode, the different active areas (8₁, 8₂, 8₃) of a section (12, 14) of the seat (4) are supplied with different voltages.

6. Device according to Claim 5, **characterised in that** each active area of the said first section of the seat (4) and the corresponding active area of the said second section of the seat (4) are supplied with the same voltage.

7. Device according to one of Claims 4 to 6, **characterised in that** the active areas of a section are supplied by means of a potential gradient through several resistors connected in series, so that the circuitry of the active areas represents a linear potentiometer circuit.

8. Device according to one of Claims 4 to 7, **characterised in that** each active area (8₁, 8₂, 8₃) comprises several individual sensors (8_{1,1}, 8_{1,2}, 8_{1,3}, 8_{1,4} or 8_{2,1}, 8_{2,2}, 8_{2,3}, 8_{2,4} or 8_{3,1}, 8_{3,2}, 8_{3,3}, 8_{3,4}) which are placed in line in the longitudinal direction of the seat.

9. Device according to Claim 8, **characterised in that**, in a second operational mode, the individual sensors (8_{1,1}, 8_{1,2}, 8_{1,3}, 8_{1,4} or 8_{2,1}, 8_{2,2}, 8_{2,3}, 8_{2,4} or 8_{3,1}, 8_{3,2}, 8_{3,3}, 8_{3,4}) of each active area are supplied with different voltages.

10. Device according to Claim 9, **characterised in that** the corresponding individual sensors (8_{1,1}, 8_{2,1}, 8_{3,1} or 8_{1,2}, 8_{2,2}, 8_{3,2} or 8_{1,3}, 8_{2,3}, 8_{3,3} or 8_{1,4}, 8_{2,4}, 8_{3,4}) of the different active areas of a section are supplied with the same voltage.

11. Device according to one of Claims 9 to 10, **characterised in that** the individual sensors (8_{1,1}, 8_{1,2}, 8_{1,3}, 8_{1,4} or 8_{2,1}, 8_{2,2}, 8_{2,3}, 8_{2,4} or 8_{3,1}, 8_{3,2}, 8_{3,3}, 8_{3,4}) of a section (12, 14) are supplied by means of a potential gradient through a linear resistor (32) or several resistors connected in series (32₁, 32₂, 32₃, 32₄, 32₅), so that the circuitry of the individual sensors represents a linear potentiometer circuit.

12. Device according to one of Claims 3 to 11, **characterised in that** the said force detector (2) comprises force sensors (6) whose electric resistance varies with the applied force.

13. Device according to one of Claims 1 to 12, **characterised by** a circuit for monitoring the integrity of the conductors.

14. Device according to one of Claims 1 to 13, **characterised in that** the said means for determining the positions of the centres of gravity is incorporated in the cushion of the seat (4).

15. Method for determining the size and/or the weight of a person sitting on a seat, **characterised by** the steps:
subdivide the surface of the seat (4) into at least two sections,
determine the respective position of the centre of gravity of the active weight in each section, i.e. determine the positions at which the force exerted by said person acts on each of said sections of said seat, and
evaluate the size and/or the weight of the said person from the said respective positions so determined.

16. Method according to Claim 15, **characterised in that** the surface of the seat is subdivided into two laterally adjacent sections, and **in that** the evaluation of the size and/or the weight comprises the determination of the distance between the positions of the two centres of gravity of the weight in the said two sections.

17. Method according to one of Claims 15 to 16, **characterised by** the additional step of evaluating the position of the said person on the said seat from the distribution of the positions of the centres of gravity on the seat.

18. Method according to one of Claims 15 to 17, **characterised by** the additional step of evaluating the orientation of the said person on the said seat from the longitudinal positions of the centres of gravity of the active weight in each section.

19. Method according to one of Claims 17 or 18, **characterised in that** the evaluation of the different parameters is carried out sequentially.

20. Use of a device according to one of Claims 1 to 14 in the control of an airbag of a motor vehicle.
